# EUROPEAN PATENT SPECIFICATION

(11) **EP 3 169 555 B1**
(45) Date of publication and mention of the grant of the patent: **15.08.2018**
(21) Application number: 15734667.7
(22) Date of filing: 06.07.2015
(51) Int. Cl.: B60R 25/021

(54) **ANTITHEFT DEVICE FOR A STEERING COLUMN OF A VEHICLE PROVIDED WITH A BOLT LIFTING WITH A LOW KEY TORQUE**
DIEBSTAHLSICHERUNGSVORRICHTUNG FÜR DIE LENKSÄULE EINES FAHRZEUGS EINEM BOLZEN, DER SICH MIT EINEM NIEDRIGEN SCHLÜSSELDREHMOMENT ANHEBT
DISPOSITIF ANTIVOL POUR COLONNE DE DIRECTION D'UN VÉHICULE POURVU D'UNE BOUCLE DE SUSPENSION AVEC FAIBLE COUPLE DE CLÉS

(30) Priority: 16.07.2014 EP 14306157
(43) Date of publication of application: 24.05.2017
(73) Proprietor: U-Shin France, 94000 Créteil (FR)
(72) Inventor: POGGI, Patrice, F-94046 Creteil Cedex (FR); JULIEN, Renaud, F-94046 Creteil Cedex (FR)
(74) Representative: Gaillarde, Frédéric F. Ch.
(86) International application number: PCT/EP2015/065385
(87) International publication number: WO 2016/008760

(56) References cited:
- EP-A1- 2 578 457
- FR-A1- 2 885 632
- FR-A1- 2 952 006
- JP-A- 2009 083 642
- JP-A- 2009 107 551
- US-A- 4 387 582
- US-A1- 2007 006 620

## Description

The invention relates to an antitheft device for a steering column of a vehicle.

These devices generally include a latch of an ignition key of the vehicle, as well as a bolt adapted to lock the movement of the steering column of a car. The main function of such devices is to lock the movement of the steering column whenever this movement is not authorized.

An antitheft device according to the preamble of claim 1 is known from FR 2 885 632 A1.

Generally, the unlocking of the antitheft device is done by turning the key into the latch. However, such movement requires a certain force that must be applied by a human hand. Depending on the vehicle user, the force to apply can prove difficult for certain person, such as old or arm/wrist injured people.

Additionally, under certain conditions, a worn out key forced upon the latch to unlock the steering column can snap under the heavy torque applied. This can prove bothersome as well as painful for the vehicle user.

One object of the invention is to provide an antitheft device for a steering column of a vehicle, in particular a bolt designed such as the antitheft device does not present the drawbacks mentioned hereinabove.

To this end, the invention proposes an antitheft device for a steering column of a vehicle according to claim 1. Advantageously, the antitheft device according to the invention provides a bolt lifting movement with a low key torque. The unlocking of the antitheft device is smoother, providing a safest movement for the user.

According to further embodiments which can be considered alone or in combination:
- the surfaces of the first portion of the cavity in the locking bolt are ramps, and/or
- the angle between the direction of movement of the slider when interacting with the surface of the first portion and the tangent plane to said surface increases monotonically from an angle smaller than 90° as the slider slides towards the interface between the first and the second potion, and/or
- the surfaces of the first portion of the cavity in the locking bolt are planes, and/or
- the surfaces of the second portion of the cavity in the locking bolt are ramps, and/or
- the angle between the direction of movement of the slider when interacting with the surface of the second potion and the tangent plane to said surface increases monotonically from an angle higher than 90° as the slider slides away from the interface between the first and the second portion, and/or
- the surfaces of the second potion of the cavity in the locking bolt are planes, and/or
- the cavity in the locking bolt is designed such as the slider maneuvers said locking bolt without dead travel, and/or
- the first portion comprises a surface on the opposite side of the surface of the second portion parallel to said surface of the first portion, and/or
- the second portion comprises a surface on the opposite side of the surface of the second portion parallel to said surface of the second portion, and/or
- the antitheft device comprises a latch, a rotor being coupled to said latch, and a camshaft, wherein said camshaft is designed to be dragged in rotation by the movement of the rotor and induces a uniform translating movement to the slider.

The invention also relates to a vehicle comprising an antitheft device according to the invention.

Non limiting embodiments of the invention will now be described with reference to the accompanying drawing wherein:
- Figure 1 is an isometric overview of an antitheft device according to the invention,
- Figure 2 is a partial cut-away view of an antitheft device according to the invention,
- Figure 3 shows the main parts of one embodiment of the antitheft device interacting with each, other without the housing,
- Figure 4 is a schematic view of a locking bolt according to a prior art antitheft device,
- Figure 5 is a schematic view of a locking bolt according to the invention,
- Figures 6a to 6c show the translation of a locking bolt according to the invention when actuated by the slider, as well as the position of the bolt relative to the steering column.

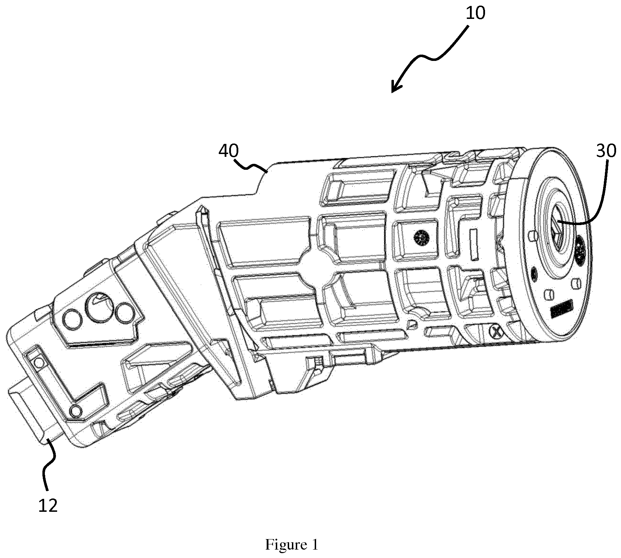

Figure 1 represents an isometric overview of an antitheft device 10 as isolated from a vehicle. The device comprises a latch 30 for a key, which, when turned, permits the ignition of the motor and actuate a locking bolt 12 to occupy a position to lock the steering column 20 (not shown in figure 1) of the vehicle. The antitheft mechanism is enclosed in a housing 40. The housing 40 is then embedded in a vehicle.

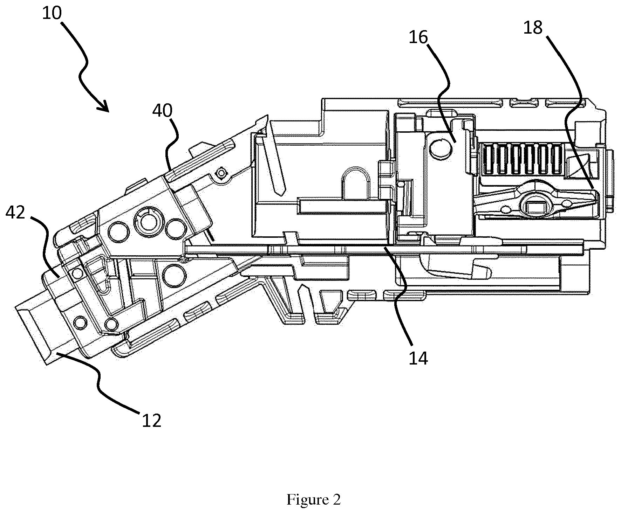

Figure 2 shows a partial cut-away view of the antitheft device wherein the main elements of the invention are visible. When the key is inserted into the latch 30 and turned, the rotor 18 rotates, dragging along the camshaft 16. The camshaft 16 comprises a uniform slope that permits, when rotating, to induce a uniform translating movement to the slider 14. The slider 14 translates within a slide in the housing 40 to enable a movement on a horizontal axis only. The slider 14 then drags along the locking bolt 12, which is located in a bolt housing 42, the bolt housing 42 embedded in the housing 40. The bolt housing 42 allows the bolt 12 to slide in only one axis and to interact with the steering column. The actuation of the rotor 18 using the key controls the position of the locking bolt 12, thus blocking or unblocking the steering column.

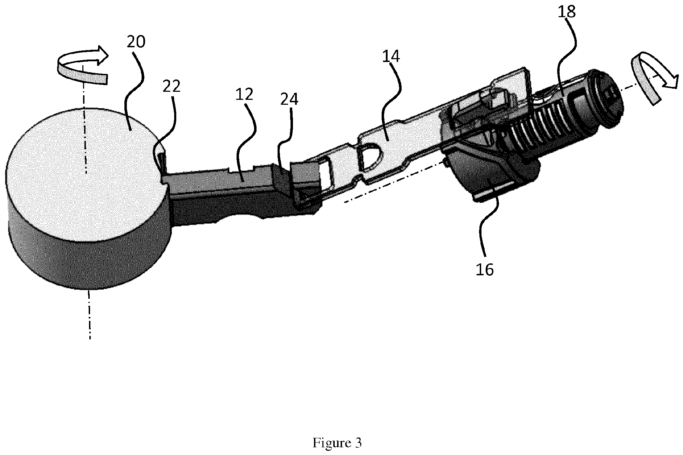

The steering column 20 shown on figure 3 comprises a slot 22 adapted to receive the bolt 12 which permits the locking in position of the steering column 20 about its axis of rotation. Whenever the steering column 20 is in its locked position, and if a torque is applied to the column axis, the steering column 20 applies a force on the bolt 12. This force, depending on its intensity, is a source of the difficulty (or impossibility) to unlock the steering column 20 by solely turning the key in the latch 30.

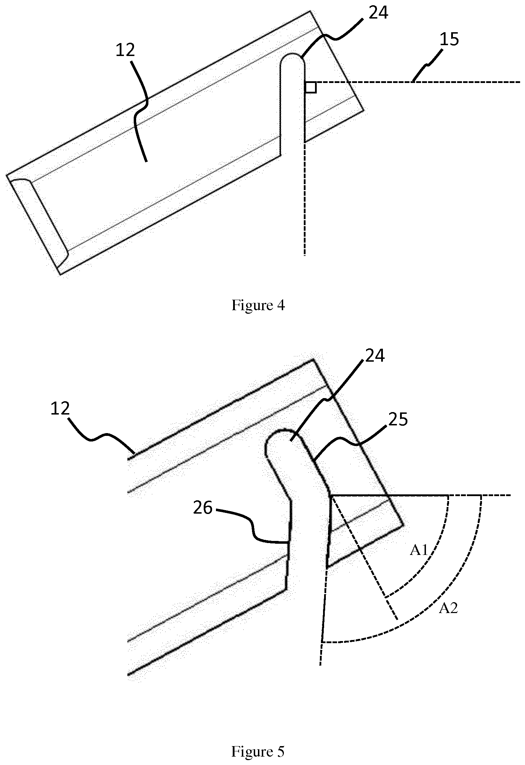

Figure 4 shows a prior art locking bolt 12. The locking bolt 12 has a parallelepiped shape and comprises a U-shaped cavity 24 characterized by two parallel flat ramps. The end of the cavity 24 has a rounded shape, and the cavity 24 being U-shaped, the opposite side is open.

In that case, the cavity 24 is oriented perpendicularly to the direction of movement 15 of the slider 14. The slider 14 interacts with the cavity 24 of the locking bolt 12 by sliding along the ramp in the cavity 24. When the slider 14 translates by a stroke originating from the key turning into the latch 30, the locking bolt 12 slides along the direction of the bolt housing 42. As a consequence of the design of the locking bolt 12 on figure 4, the force needed to translate the slider 14 is higher than the force needed to move the locking bolt 12. Consequently, the torque that has to be applied to the key in the latch 30 is high and it often proves difficult for a human hand to actuate the key in the latch 30.

The present invention aims at easing the unlocking of the steering column 20 by improving the design of the bolt 12 in order to reduce the torque that the vehicle user needs to apply to the key to unlock the steering column 20.

Figure 5 shows a design for the bolt 12 according to one embodiment of the invention. The bolt 12 has a parallelepiped shape and comprises a cavity 24. The cavity 24, contrary to one of the prior art locking bolt, is separated in two portions. Each portion comprises two parallel ramps, both characterized by their angle relative to the direction of movement 15 of the slider 14. The first portion 25 is designed such as its angle A1 relative to the direction of movement 15 of the slider 14 is smaller than 90 degrees. The second portion 26 is designed such as its angle A2 relative to the direction of movement 15 of the slider 14 is greater than 90 degrees. Preferably, the width of the cavity 24 is adapted so that the slider 14 moves along the cavity 24. This movement may be done without dead travel.

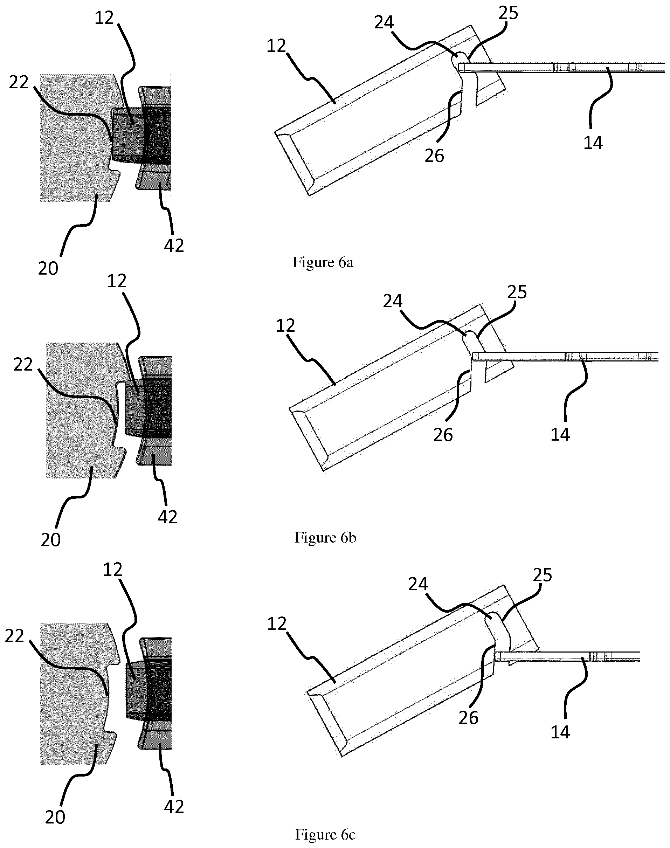

Figures 6a to 6c represent the different positions of the slider within the cavity 24 of a bolt 12 according to one embodiment of the invention and the position of the bolt 12 in interaction with the steering column 20.

On figure 6a, the steering column 20 is blocked in position with the bolt 12 located in the slot 22 of the steering column 20. In this position, a pre-load is generally applied on the steering column 20. Therefore, the steering column 20 exerts a force on the bolt 12 that prevents the bolt 12 to be easily removed from the slot 22 of the steering column 20. In this embodiment, the design of the first ramp 25 enables the slider 14 to move within the cavity 24 with a low force applied. During the sliding of the slider 14 on the first ramp 25, the stroke evolution of the bolt 12 is slow, but allows the bolt 12 to begin its course for the unlocking of the steering column 20 without requiring an important force from the user.

On figure 6b, the steering column 20 is close to the unlocked position. The bolt 12 is still in contact with the steering column 20 but the torque applied by the steering column 20 to the bolt 12 is negligible. The slider 14 is located at the end of the first portion 25, near the interface between the first portion 25 and the second portion 26. At this point, the force needed to be applied to the slider 14 is still low and the stroke evolution of the bolt 12 remains slow.

As the slider 14 transfers to the second portion 26, as shown on figure 6c, the bolt 12 has completely left the slot 22 of the steering column 20. However, the bolt 12 needs to complete the stroke. At this point, the steering column 20 does not exert any force on the bolt 12. Thus, the force needed to translate the bolt 12 is very low. The slider 14 moves along the second portion 26 to finish the stroke of the bolt 12 and to finalize the unlocking action. The angle A2 between the ramp of the second portion 26 and the direction of movement 15 of the slider 14 is over 90 degrees, which increases the bolt stroke evolution, permitting to finish the stroke of the bolt 12.

The invention is not limited to the one embodiment as shown previously. Indeed, in another embodiment, the angle between the direction of movement 15 of the slider 14 when interacting with the surface of the first portion 25 and the tangent plane to said surface increases monotonically from an angle smaller than 90° as the slider slides towards the interface between the first 25 and the second portion 26. Also, the angle between the direction of movement 15 of the slider 14 when interacting with the surface of the first portion 25 and the tangent plane to said surface cannot be higher than 90°, at least on the first portion 25 of the cavity 24.

On the second portion 26, the angle between the direction of movement 15 of the slider 14 when interacting with the surface of the second portion 26 and the tangent plane to said surface increases monotonically from an angle higher than 90° as the slider slides away from the interface between the first 25 and the second portion 26.

The angles considered in this embodiment are the complementary angles to 90° between the direction of movement 15 of the slider 14 and the normal of the tangent plane to the surface of whichever portion the slider is interacting with.

Also, the ramps are designed in such a way that the movement of the slider 14 within the cavity 24 ensures the entire unlocking movement of the antitheft device.

The invention has been described above with the aid of embodiments without limitation of the general inventive concept.

Many further modifications and variations will suggest themselves to those skilled in the art upon making reference to the foregoing illustrative embodiments, which are given by way of example only and which are not intended to limit the scope of the invention, that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. An antitheft device for a steering column of a vehicle, the device comprising:
- a locking bolt (12) able to occupy a position for locking the steering column (20) and comprising a cavity (24) comprising two portions (25, 26),
- a slider (14) for maneuvering the locking bolt (12) between a lock and an unlocked position by interacting with surfaces of the first and second portions of the cavity of the locking bolt and having a rectilinear movement,
wherein:
- said surface of the first portion is arranged so that the angle (A1) between the direction of movement of the slider (14) when interacting with said surface and the tangent plane to said surface is smaller than 90°, and wherein said first portion comprises a surface on the opposite side of the surface of the first portion parallel to said surface,
**characterised in that**
- said surface of the second portion is arranged so that the angle (A2) between the direction of movement of the slider (14) when interacting with said surface and the tangent plane to said surface is greater than 90°, and wherein said second portion comprises a surface on the opposite side of the surface of the second portion parallel to said surface,
and **in that** the cavity in the locking bolt (12) is designed such that the slider (14) maneuvers said locking bolt without dead travel.

2. An antitheft device according to claim 1, wherein the surfaces of the first portion (25) of the cavity (24) in the locking bolt (12) are ramps.

3. An antitheft device according to any of the preceding claims, wherein the angle between the direction of movement (15) of the slider (14) when interacting with the surface of the first portion and the tangent plane to said surface increases monotonically from an angle smaller than 90° as the slider slides towards the interface between the first and the second portion.

4. An antitheft device according to any of the preceding claims, wherein the surfaces of the first portion (25) of the cavity (24) in the locking bolt (12) are planes.

5. An antitheft device according to any of the preceding claims, wherein the surfaces of the second portion (26) of the cavity (24) in the locking bolt (12) are ramps.

6. An antitheft device according to any of the preceding claims, wherein the angle between the direction of movement (15) of the slider (14) when interacting with the surface of the second portion and the tangent plane to said surface increases monotonically from an angle higher than 90° as the slider (14) slides away from the interface between the first and the second portion.

7. An antitheft device according to any of the preceding claims, wherein the surfaces of the second portion (26) of the cavity (24) in the locking bolt (12) are planes.

8. An antitheft device according to any of the preceding claims, wherein the antitheft device comprises a latch (30), a rotor (18) being coupled to said latch (30), and a camshaft (16), wherein said camshaft (16) is designed to be dragged in rotation by the movement of the rotor (18) and induces a uniform translating movement to the slider (14).

## Patentansprüche

1. Diebstahlsicherungsvorrichtung für eine Lenksäule eines Fahrzeugs, wobei die Vorrichtung Folgendes umfasst:
- einen Verriegelungsbolzen (12), der dazu in der Lage ist, eine Position zur Verriegelung der Lenksäule (20) einzunehmen, und umfassend einen Hohlraum (24), umfassend zwei Abschnitte (25, 26),
- einen Schieber (14), um den Verriegelungsbolzen (12) zwischen einer verriegelten und einer unverriegelten Position durch Interagieren mit Oberflächen des ersten und zweiten Abschnitts des Hohlraums des Verriegelungsbolzens zu verschieben, und aufweisend eine geradlinige Bewegung,
wobei:
- die Oberfläche des ersten Abschnitts derart angeordnet ist, dass der Winkel (A1) zwischen der Bewegungsrichtung des Schiebers (14), wenn er mit der Oberfläche und der Tangentialebene zu der Oberfläche interagiert, kleiner als 90° ist, und wobei der erste Abschnitt eine Oberfläche auf der gegenüber liegenden Seite der Oberfläche des ersten Abschnitts parallel zu der Oberfläche umfasst,
**dadurch gekennzeichnet, dass**
- die Oberfläche des zweiten Abschnitts derart angeordnet ist, dass der Winkel (A2) zwischen der Bewegungsrichtung des Schiebers (14), wenn er mit der Oberfläche und der Tangentialebene zu der Oberfläche interagiert, größer als 90° ist, und wobei der zweite Abschnitt eine Oberfläche auf der gegenüber liegenden Seite der Oberfläche des zweiten Abschnitts parallel zu der Oberfläche umfasst, und dadurch, dass der Hohlraum im Verriegelungsbolzen (12) derart entworfen ist, dass der Schieber (14) den Verriegelungsbolzen ohne Totgang bewegt.

2. Diebstahlsicherungsvorrichtung nach Anspruch 1, wobei die Oberflächen des ersten Abschnitts (25) des Hohlraums (24) im Verriegelungsbolzen (12) Rampen sind.

3. Diebstahlschutzvorrichtung nach einem der vorhergehenden Ansprüche, wobei der Winkel zwischen der Bewegungsrichtung (15) des Schiebers (14), wenn er mit der Oberfläche des ersten Abschnitts und der Tangentialebene zu der Oberfläche interagiert, monoton von einem Winkel von weniger als 90° erhöht, wenn sich der Schieber hin zur Schnittstelle zwischen dem ersten und dem zweiten Abschnitt schiebt.

4. Diebstahlschutzvorrichtung nach einem der vorhergehenden Ansprüche, wobei die Oberflächen des ersten Abschnitts (25) des Hohlraums (24) im Verriegelungsbolzen (12) Ebenen sind.

5. Diebstahlschutzvorrichtung nach einem der vorhergehenden Ansprüche, wobei die Oberflächen des zweiten Abschnitts (26) des Hohlraums (24) im Verriegelungsbolzen (12) Rampen sind.

6. Diebstahlschutzvorrichtung nach einem der vorhergehenden Ansprüche, wobei der Winkel zwischen der Bewegungsrichtung (15) des Schiebers (14), wenn er mit der Oberfläche des zweiten Abschnitts und der Tangentialebene zu der Oberfläche interagiert, monoton von einem Winkel von mehr als 90° erhöht, wenn sich der Schieber (14) weg von der Schnittstelle zwischen dem ersten und dem zweiten Abschnitt schiebt.

7. Diebstahlschutzvorrichtung nach einem der vorhergehenden Ansprüche, wobei die Oberflächen des zweiten Abschnitts (26) des Hohlraums (24) im Verriegelungsbolzen (12) Ebenen sind.

8. Diebstahlschutzvorrichtung nach einem der vorhergehenden Ansprüche, wobei die Diebstahlschutzvorrichtung ein Schloss (30), einen Rotor (18), der mit dem Schloss (30) gekoppelt ist, und eine Nockenwelle (16) umfasst, wobei die Nockenwelle (16) entworfen ist, um durch die Bewegung des Rotors (18) in Rotation versetzt zu werden und eine gleichförmige Übertragung von Bewegung auf den Schieber (14) induziert

## Revendications

1. Dispositif antivol pour une colonne de direction d'un véhicule, le dispositif comprenant :
- un boulon de verrouillage (12) apte à occuper une position de verrouillage de la colonne de direction (20) et comprenant une cavité (24) qui comprend deux parties (25, 26),
- un coulisseau (14) pour manoeuvrer le boulon de verrouillage (12) entre des positions verrouillée et déverrouillée en interagissant avec des surfaces des première et deuxième parties de la cavité du boulon de verrouillage et ayant un mouvement rectiligne,
dans lequel :
- ladite surface de la première partie est agencée de sorte que l'angle (A1) entre la direction de mouvement du coulisseau (14) lorsqu'il interagit avec ladite surface et le plan tangent à ladite surface soit inférieur à 90°, et où ladite première partie comprend une surface sur le côté opposé de la surface de la première partie parallèle à ladite surface,
**caractérisé en ce que**
- ladite surface de la deuxième partie est agencée de sorte que l'angle (A2) entre la direction de mouvement du coulisseau (14) lorsqu'il interagit avec ladite surface et le plan tangent à ladite surface soit supérieur à 90°, et où ladite deuxième partie comprend une surface sur le côté opposé de la surface de la deuxième partie parallèle à ladite surface,
et **en ce que**
la cavité dans le boulon de verrouillage (12) est conçue de sorte que le coulisseau (14) manoeuvre ledit boulon de verrouillage sans course morte.

2. Dispositif antivol selon la revendication 1, dans lequel les surfaces de la première partie (25) de la cavité (24) dans le boulon de verrouillage (12) sont des rampes.

3. Dispositif antivol selon l'une des revendications précédentes, dans lequel l'angle entre la direction de mouvement (15) du coulisseau (14) lorsqu'il interagit avec la surface de la première partie et le plan tangent à ladite surface augmente de manière monotone à partir d'un angle inférieur à 90° à mesure que le coulisseau coulisse vers l'interface entre les première et deuxième parties.

4. Dispositif antivol selon l'une des revendications précédentes, dans lequel les surfaces de la première partie (25) de la cavité (24) dans le boulon de verrouillage (12) sont des plans.

5. Dispositif antivol selon l'une des revendications précédentes, dans lequel les surfaces de la deuxième partie (26) de la cavité (24) dans le boulon de verrouillage (12) sont des rampes.

6. Dispositif antivol selon l'une des revendications précédentes, dans lequel l'angle entre la direction de mouvement (15) du coulisseau (14) lorsqu'il interagit avec la surface de la deuxième partie et le plan tangent à ladite surface augmente de manière monotone à partir d'un angle supérieur à 90° à mesure que le coulisseau (14) coulisse à l'écart de l'interface entre les première et deuxième parties.

7. Dispositif antivol selon l'une des revendications précédentes, dans lequel les surfaces de la deuxième partie (26) de la cavité (24) dans le boulon de verrouillage (12) sont des plans.

8. Dispositif antivol selon l'une des revendications précédentes, dans lequel le dispositif antivol comprend un verrou (30), un rotor (18) qui est couplé audit verrou (30), et un arbre à cames (16), dans lequel ledit arbre à cames (16) est conçu pour être entraîné en rotation par le mouvement du rotor (18) et induit un mouvement de translation uniforme au coulisseau (14).
